Europäisches Patentamt

European Patent Office

Office européen des brevets

(11) Veröffentlichungsnummer: **0 025 874**
**A1**

# (12) EUROPÄISCHE PATENTANMELDUNG

(21) Anmeldenummer: **80104935.4**

(22) Anmeldetag: **20.08.80**

(51) Int. Cl.³: **F 16 F 9/36**

(30) Priorität: **25.09.79 DE 2938722**

(43) Veröffentlichungstag der Anmeldung:
**01.04.81 Patentblatt 81/13**

(84) Benannte Vertragsstaaten:
**AT BE FR GB IT NL SE**

(71) Anmelder: **Firma August Bilstein**

**D-5828 Ennepetal-Altenvoerde(DE)**

(72) Erfinder: **de Baan, Johannes Jasper**
**Peddenöderstrasse 2**
**D-5828 Ennepetal 18(DE)**

(72) Erfinder: **Adrian, Adolf**
**Altenloherweg 17**
**D-5828 Ennepetal 13(DE)**

(74) Vertreter: **Sturies, Herbert et al,**
**Patentanwälte Dr. Ing. Dipl. Phys. Herbert Sturies Dipl.**
**Ing. Peter Eichler Postfach 20 12 42**
**D-5600 Wuppertal 2(DE)**

(54) Hydropneumatischer Schwingungsdämpfer, insbesondere für Kraftfahrzeug-Vorderachsbeine.

(57) Hydropneumatischer Schwingungsdämpfer besitzen einen Dämpfungsflüssigkeit und Druckgas enthaltenen Dämpferzylinder (3'), einen darin im Bereich der Dämpfungsflüssigkeit verschieblich geführten Arbeitskolben und eine letzteren tragende Kolbenstange (9). Diese ist durch ein im gegenüberliegenden Ende des Dämpferzylinders (3') vorhandenes Verschlußpaket (11) hindurchgeführt, das mit einer am Kolbenstangenumfang anliegenden Dichtung (18) versehen ist.

Damit diese Dichtung (18) durch seitliche Verlagerungen oder Durchbiegungen der Kolbenstange (9) nicht einseitig beansprucht oder verformt wird, ist sie in einer Gleitbüchse (16) angeordnet, die einen an der Kolbenstange (9) anliegenden Innenrandflansch (16'') aufweist und im Verschlußpaket (11) in einer quer zur Kolbenstangen-Längsrichtung verlaufenden Ebene frei verschieblich gelagert ist.

Fig. 2

0025874

Firma August Bilstein, 5828 Ennepetal-Altenvoerde

=================================================


"Hydropneumatischer Schwingungsdämpfer, insbesondere für

Kraftfahrzeug-Vorderachsbeine"


Die Erfindung bezieht sich auf einen hydropneumatischen Schwingungsdämpfer, insbesondere für Kraftfahrzeug-Vorderachsbeine, der mit einem Dämpferzylinder, einem
darin im Bereich der Dämpfungsflüssigkeitsfüllung verschieblich geführten Arbeitskolben und einer letzteren
tragenden Kolbenstange versehen ist, die durch ein im
gegenüberliegenden Ende des Dämpferzylinders vorhandenes,
mit einer am Kolbenstangenumfang anliegenden Dichtung
versehenes Verschlußpaket hindurchgeführt ist.

Bei bekannten Schwingungsdämpfern obiger Art ist die Kolbenstangen-Dichtung, die zumeist aus einem Dichtlippenring auf Gummi- oder Kautschukbasis besteht, im Verschlußpaket des Dämpferzylinders fest eingebaut. Die Dichtlippe des Dichtringes steht dabei zumeist unter dem Druckeinfluß der im Dämpferzylinder befindlichen Dämpfungsflüssigkeit. Um den Anlagedruck der Dichtlippe am Kolbenstangenumfang zu vergrößern und auch möglichst gleichmäßig zu halten, ist in manchen Fällen um die Dichtlippe eine Schlauchfeder herumgelegt. Wie die Praxis aber gezeigt hat, können die herkömmlichen Kolbenstangendichtungen bei hydropneumatischen Schwingungsdämpfern noch nicht voll befriedigen, da ihre Dichtwirkung regelmäßig schon nach verhältnismäßig kurzer Betriebsdauer nachläßt und es zu erheblichen Leckagen am Kolbenstangenumfang und damit zu entsprechenden Dämpfungsflüssigkeitsverlusten kommt. Das ist insbesondere bei Schwingungsdämpfern der Fall, bei denen die Dämpfungsflüssigkeit unter hohem Gasdruck steht und somit bei nachlassender Kolbenstangenabdichtung vermehrt Dämpfungsflüssigkeit austritt.

Der Erfindung liegt daher die Aufgabe zugrunde, einen hydropneumatischen Schwingungsdämpfer, insbesondere für Kraftfahrzeug-Vorderachsbeine, zu schaffen, dessen Kolbenstangen-Dichtung auch nach längerer Betriebsdauer des Schwingungsdämpfers noch voll wirksam bleibt und eine einwandfreie Abdichtung des Kolbenstangendurchtritts gewährleistet. Diese Aufgabe wird erfindungsgemäß dadurch gelöst, daß die Dichtung in einer Gleitbüchse angeordnet ist, die im Verschlußpaket in einer quer zur Kolbenstangen-Längsrichtung verlaufenden Ebene frei verschieblich gelagert ist und einen Innenrandflansch aufweist, über den sie am Kolbenstangenumfang anliegt. Auf diese Weise wird sichergestellt, daß die Kolbenstangen-Dichtung keinerlei von der Kolbenstange hervorgerufene Querkräfte aufzunehmen braucht und daher mit ringsum gleichmäßigem leichtem Andruck am Kolbenstangenumfang anzuliegen vermag. Durch ihren an der Kolbenstange anliegenden Innenrandflansch wird nämlich die Dichtungs-Gleitbüchse stets zentriert zur Kolbenstange gehalten bzw. geführt, ohne daß diese Zentrier-bzw. Führungskräfte die eigentliche Dichtung beeinflussen, letztere also völlig frei von Querkräften bzw. -beanspruchungen gehalten wird. Etwaige schon von der Montage her bedingte, insbesondere auch auch erst im Betriebszustand auftretende, praktisch nie ganz zu vermeidende Verlagerungen oder Durchbiegungen der Kolbenstange führen somit zu entsprechenden Verlagerungen der Gleitbüchse und bleiben daher ohne Einfluß auf die Dichtung, so daß an ihr keinerlei einseitige Beanspruchungen oder unregelmäßige Verformungen auftreten können, mithin die Dichtung ihre volle, bestmögliche Dichtwirkung entfalten und dauerhaft beibehalten kann.

Vorzugsweise ist die Dichtungs-Gleitbüchse über einen in ihrer einen Stirnseite eingebetteten Dichtring, insbesondere einen O-Ring, auf einer metallischen Gleitscheibe des Verschlußpakets gleitverschieblich abgestützt. Das ergibt eine leichte Gleitverschiebemöglichkeit bei zugleich guter Außenabdichtung der Dichtungs-Gleitbüchse im Verschlußpaket.

Nach einem weiteren Merkmal der Erfindung ist die Dichtung als Lippendichtring ausgebildet, der in einer entsprechenden Innenaussparung der Gleitbüchse untergebracht ist, die mit ihrem am Kolbenstangenumfang anliegenden Innenrandflansch den Lippendichtring axial abstützt. Das unterstützt dessen bleibend gute Dichtwirkung.

Wenngleich die Dichtungs-Gleitbüchse grundsätzlich bei allen hydropneumatischen Schwingungsdämpfern für deren wirksame Kolbenstangenabdichtung eingesetzt werden kann, ist sie mit besonderem Vorteil in all den Fällen zu verwenden, wo die Kolbenstange bisher in statisch überbestimmter Form an mehr als zwei Stellen geführt wird, wie das insbesondere bei herkömmlichen Kraftfahrzeug-Vorderachsbeinen der Fall ist. So ist die Dichtungs-Gleitbüchse vorteilhaft im unteren Ende des in einem Außenrohr eines Kraftfahrzeug-Vorderachsbeins gleitverschieblich gelagerten Dämpferzylinders eingebaut, dessen nach unten austretende Kolbenstange mit dem Boden des Außenrohres fest verbunden ist. In diesem Falle ist die Kolbenstange also nur an ihrem unteren Ende am Außenrohrboden und an ihrem oberen Ende über den hier vorhandenen Arbeitskolben im Dämpferzylinderrohr geführt, wobei also die sonst vorhan-

dene Zwangsführung am Kolbenstangendurchtritt des
Dämpferzylinders entfällt und hier lediglich die in der
frei verschieblichen Gleitbüchse vorhandene Dichtung am
Kolbenstangenumfang anliegt.

Die Dichtungs-Gleitbüchse kann aber ebenso gut auch
in das oben gelegene Verschlußpaket eines als Kraftfahrzeug-Vorderachsbein ausgebildeten Zweirohr-Schwingungsdämpfers eingebaut sein, an dessen Außenzylinder der
Radachszapfen befestigt ist und in dessen Innenzylinder
die Kolbenstange einerseits über den von ihr getragenen
Arbeitskolben und andererseits über eine nahe unter dem
Verschlußpaket gelegene Führungsbüchse geführt ist. Auch
in diesem Falle liegt wiederum nur eine statisch bestimmte
zweifache Führung der Kolbenstange vor, ohne daß von der
Kolbenstangen-Dichtung irgendwelche Querkräfte aufgenommen
zu werden brauchen.

In der Zeichnung sind zwei vorteilhafte Ausführungs-
bzw. Einsatzbeispiele eines mit der Dichtungs-Gleitbüchse
versehenen hydropneumatischen Schwingungsdämpfers nach der
Erfindung dargestellt. Dabei zeigt

Fig. 1 einen teilweisen Längsschnitt durch ein Kraftfahrzeug-Vorderachsbein mit einem darin gleitverschieblich gelagerten hydropneumatischen Einrohr-Schwingungsdämpfer mit nach unten austretentender Kolbenstange,

Fig. 2 eine vergrößerte Schnittdarstellung des Dämpferzylinder-Verschlußpakets im Bereich A der Fig. 1,

Fig. 3 die Seitenansicht eines Kraftfahrzeug-Vorderachsbeins in Gestalt eines Zweirohr-Schwingungsdämpfers mit nach oben austretender Kolbenstange

und

Fig. 4 einen vergrößerten Längsschnitt des Bereichs B der Fig. 3.

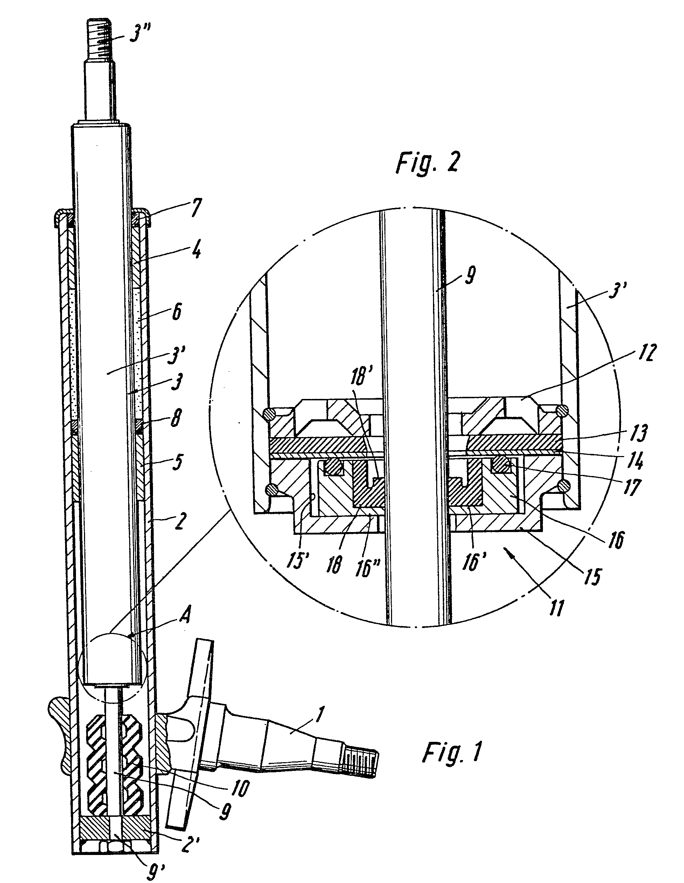

Das in Fig. 1 abgebildete Kraftfahrzeug-Vorderachsbein ist mit einem an seinem unteren Ende den Radachszapfen 1 tragenden Außenrohr 2 versehen, in welchem der hydropneumatische Einrohr-Schwingungsdämpfer 3 über die am Außenrohr 2 fest eingebauten Führungsringe 4,5 gleitverschieblich gelagert ist. Zwischen den Führungsringen 4,5 und dem Dämpferzylinder 3' sowie dem Außenrohr 2 ist eine mit einem Schmiermittel gefüllte Ringkammer 6 vorhanden, die nach oben und unten durch die Dichtungsringe 7,8 abgedichtet ist. Der Dämpferzylinder 3' ist oben mit einem Befestigungsstift 3'' versehen, über den er mit dem Fahrzeugrahmen fest verbunden wird. Die an ihrem inneren Ende den nicht dargestellten, in die Dämpfungsflüssigkeit des Dämpferzylinders 3' eintauchenden Arbeitskolben tragende Kolbenstange 9 ragt nach unten aus dem Dämpferzylinder 3' heraus und ist über ihr unteres Ende 9' mit dem Boden 2' des Außenrohres 2 fest verbunden. Der Anschlagpuffer 10 dient als nachgiebiger Begrenzungsanschlag für zu starke Kolbenstangen-Einfahrbewegungen.

Wie aus Fig. 2 ersichtlich ist, befindet sich am unteren Ende des Dämpferzylinders 3' das generell mit 11 bezeichnete Verschlußpaket, durch das die Kolbenstange 9 abgedichtet hindurchgeführt ist. Dieses Verschlußpaket 11 besteht aus dem inneren Verschlußboden 12, einer zur Außenabdichtung dienenden Gummiringscheibe 13, einer metallischen, vorzugsweise aus Federstahl bestehenden Gleitscheibe 14, dem Verschlußdeckel 15 sowie der Dichtungs-Gleitbüchse 16. Diese Gleitbüchse 16 ist in der Innenaussparung 15' des Verschlußdeckels 15 mit hinreichendem radialem Bewegungsspiel, also in einer quer zur Kolbenstangen-Längsrichtung verlaufenden Ebene, frei beweglich gelagert. Die Gleitbüchse 16 stützt sich dabei über den in ihre obere Stirnseite eingelassenen O-Ring 17 an der metallischen Gleitscheibe 14 ab. In ihre entsprechend gestaltete Innenaussparung 16' ist der die eigentliche Kolbenstangen-Dichtung bildende Dichtlippenring 18 untergebracht, der vorzugsweise L-förmig profiliert ist und aus Gummi- oder Kautschuk geeigneter Zusammensetzung besteht. Die Dichtlippe 18' des Dichtringes 18 liegt überall gleichmäßig am Kolbenstangenumfang an. Desgleichen liegt auch der den Dichtlippenring 18 axial abstützende Innenrandflansch 16'' der Gleitbüchse 16 am Kolbenstangenumfang an. Dadurch wird sichergestellt, daß die Gleitbüchse 16 und damit auch ihr Dichtlippenring 18 etwaigen Verlagerungsbewegungen oder Durchbiegungen der Kolbenstange 9 ohne weiteres zu folgen vermag und somit der Dichtlippenring 18 bzw. dessen Dichtlippe 18' keinerlei Querkräfte aufzunehmen braucht. Dadurch wird eine hochwirksame Kolbenstangen-Abdichtung erzielt, die auch nach langer Betriebsdauer voll bestehen bleibt, weil auf diese Weise jedwede ungleichmäßige Beanspruchung des Dichtlippenringes 18 vermieden wird. Die Kolbenstange kann sich an dieser Durchtrittsstelle, da auch die entsprechenden Durchtrittsbohrungen im Verschlußboden 12 und im Verschlußdeckel 15 mit entsprechend großem Übermaß versehen sind, seitlich frei einstellen bzw. verlagern, wobei die Gleitbüchse 16 über ihren Innenrandflansch 16'' diesen Bewegungen in selbstzentrierender Weise ohne weiteres zu folgen vermag und die Dichtung 18 selber davon unbeeinflußt bleibt.

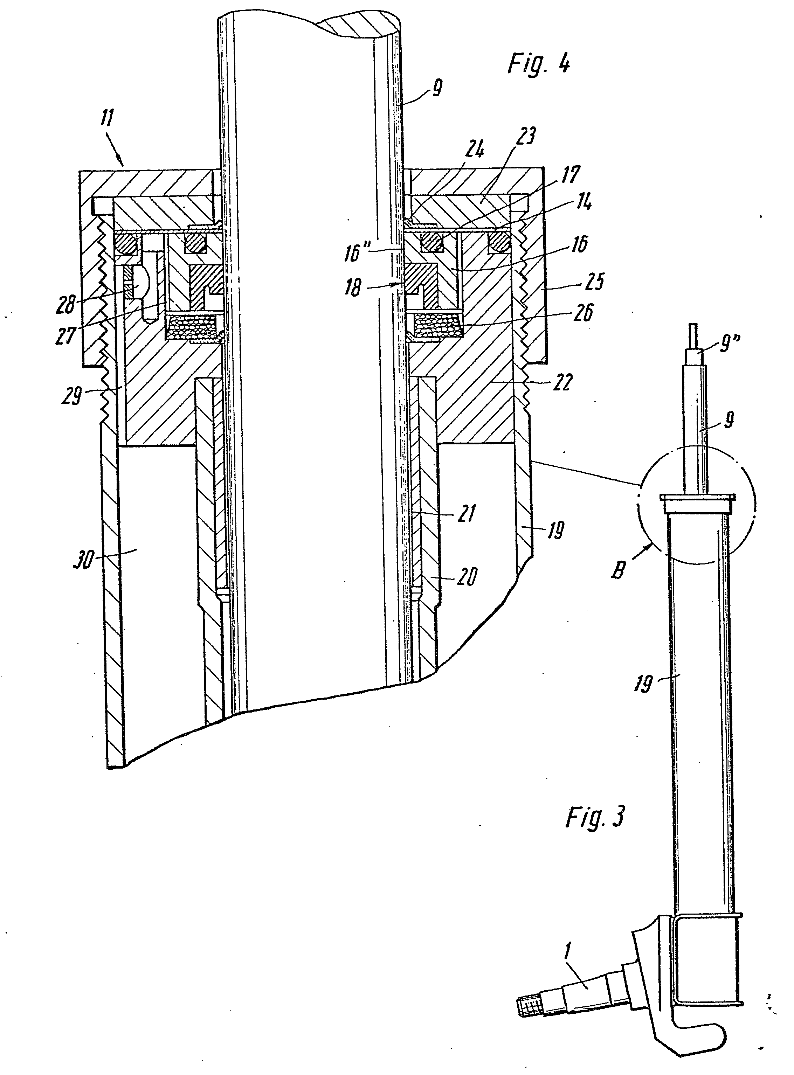

Das in Fig. 3 dargestellte Kraftfahrzeug-Vorderachsbein ist als hydropneumatischer Zweirohr-Schwingungsdämpfer ausgebildet, dessen Außenzylinderrohr 19 an seinem unteren Ende den Radachszapfen 1 trägt, während die Kolbenstange 9 mit dem an ihrem inneren Ende gelegenen, nicht dargestellten Arbeitskolben im Innenzylinderrohr 20 geführt und nach oben aus dem Zweirohrdämpfer herausgeführt ist, wo sie über den Befestigungsstift 9'' mit dem Fahrgestellrahmen verbunden werden kann. Zur oberen Führung der Kolbenstange 9 dient in diesem Falle die in das obere Ende des inneren Zylinderrohres 20 eingesetzte Führungsbüchse 21. Das die beiden Zylinderrohre 19,20 oben miteinander verbindende Verschlußpaket 11 besteht hier wiederum aus einem die Dichtungsgleitbüchse 16 radial verschieblich aufnehmenden Verschlußdeckel 22, der die Gleitbüchse 16 über deren O-Ring 17 abstützenden metallischen Gleitscheibe 14, einer Zwischenscheibe 23 mit Abstreiferring 24 und der auf das obere Ende des Außenrohres 19 aufgeschraubten Verschlußkappe 25. Unterhalb der Dichtungs-Gleitbüchse 16 ist hier in der Aussparung des Verschlußdeckels 22 noch ein aus porösem Sinterwerkstoff bestehender Ring 26 vorgesehen, der dafür sorgt, daß etwaige am Kolbenstangenumfang hochperlende Gasblasen über die Kanäle 27,28 und 29 in den zwischen den beiden Zylinderrohren 19,20 oberhalb der Dämpfungsflüssigkeit befindlichen Druckgasraum 30 entweichen können.

Auch im vorliegenden Falle stellt die mit dem Dichtlippenring 18 versehene, mit ihrem Innenrandflansch 16'' am Kolbenstangenumfang anliegende Gleitbüchse 16 sicher, daß sie bei etwaigen seitlichen Verlagerungen oder Durchbiegungen der Kolbenstange 9 diesen Bewegungen ohne weiteres zu folgen vermag und somit immer in Bezug auf die Kolbenstange 9 zentriert ausgerichtet bleibt, ohne daß dabei vom Dichtlippenring 18 irgendwelche Querkräfte aufgenommen werden. Dadurch wird auch hier eine hochwirksame und gleichwohl dauerhafte Kolbenstangen-Abdichtung erzielt.

Wie die Praxis gezeigt hat, wird durch die radial frei verschiebliche Anordnung der Dichtungs-Gleitbüchse 16 zugleich auch die ansonsten vorhandene Temperaturempfindlichkeit des Dichtlippenringes 18 wesentlich herabgesetzt, da dessen Dichtwirkung auch bei extremen Betriebstemperaturen bis zu -40° C einerseits und bis zu +140°C andererseits voll erhalten bleibt, was offenbar zum großen Teil auf die völlige Entlastung des Dichtlippenringes 18 von entsprechenden Querkräften zurückzuführen sein dürfte.

0025874

Patentansprüche:

1. Hydropneumatischer Schwingungsdämpfer, insbesondere für Kraftfahrzeug-Vorderachsbeine, mit einem Dämpferzylinder, einem darin im Bereich der Dämpfungsflüssigkeitsfüllung verschieblich geführten Arbeitskolben und einer letzteren tragenden Kolbenstange, die durch ein im gegenüberliegenden Ende des Dämpferzylinders vorhandenes, mit einer am Kolbenstangenumfang anliegenden Dichtung versehenes Verschlußpaket hindurchgeführt ist, d a d u r c h   g e k e n n - z e i c h n e t, daß die Dichtung (18) in einer Gleitbüchse (16) angeordnet ist, die im Verschlußpaket (11) in einer quer zur Kolbenstangen-Längsrichtung verlaufenden Ebene frei verschieblich gelagert ist und einen Innenrandflansch (16'') aufweist, über den sie am Kolbenstangenumfang anliegt.

2. Schwingungsdämpfer nach Anspruch 1, d a d u r c h g e k e n n z e i c h n e t, daß die Dichtungs-Gleitbüchse (16) über einen in ihre eine Stirnseite eingebetteten Dichtring, insbesondere einen O-Ring (17), auf einer metallischen Gleitscheibe (14) des Verschlußpakets (11) gleitverschieblich abgestützt ist.

3. Schwingungsdämpfer nach den Ansprüchen 1 und 2, d a d u r c h  g e k e n n z e i c h n e t, daß die Dichtungs-Gleitbüchse (16) in einer durch die Gleitscheibe (14) abgedeckten Innenaussparung (15') eines Verschlußpaketdeckels (15 bzw. 22) mit allseits radialem Bewegungsspiel untergebracht ist.

4. Schwingungsdämpfer nach einem der Ansprüche 1 bis 3, d a d u r c h  g e k e n n z e i c h n e t, daß die Dichtung als Lippendichtring (18) ausgebildet ist, der in einer entsprechenden Innenaussparung (16') der Gleitbüchse (16) untergebracht ist, die mit ihrem am Kolbenstangenumfang anliegenden Innenrandflansch (16'') den Lippendichtring (18) axial abstützt.

5. Schwingungsdämpfer nach Anspruch 4, d a d u r c h  g e k e n n z e i c h n e t, daß der Lippendichtring (18) ein L-förmiges Profil besitzt.

6. Schwingungsdämpfer nach einem der Ansprüche 1 bis 5, d a d u r c h  g e k e n n z e i c h n e t, daß die Dichtungs-Gleitbüchse (16) im unteren Ende des in einem Außenrohr (2) eines Kraftfahrzeug-Vorderachsbeins gleitverschieblich gelagerten Dämpferzylinders (3') eingebaut ist, dessen nach unten austretende Kolbenstange (9) mit dem Boden (2') des Außenrohres (2) fest verbunden ist (Fig. 1 u. 2).

7. Schwingungsdämpfer nach einem der Ansprüche 1 bis 5 d a d u r c h   g e k e n n z e i c h n e t , daß die Dichtungs-Gleitbüchse (16) in das oben gelegene Verschlußpaket (11) eines als Kraftfahrzeug-Vorderachsbein ausgebildeten Zweirohr-Schwingungsdämpfers eingebaut ist, an dessen Außenzylinder (19) der Radachszapfen (1) befestigt ist und in dessen Innenzylinder (20) die Kolbenstange (9) einerseits über den von ihr getragenen Arbeitskolben und andererseits über eine nahe unter dem Verschlußpaket (11) gelegene Führungsbüchse (21) geführt ist. (Fig. 3 u. 4).

Fig. 2

Fig. 1

*Fig. 4*

*Fig. 3*

0025874

Europäisches
Patentamt

**EUROPÄISCHER RECHERCHENBERICHT**

Nummer der Anmeldung

EP 80 10 49.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | .DE - U - 1 690 015 (GOETZEWERKE F. GOETZE AG)  * ganzes Dokument * | 1-4 |
| | DE - U - 7 708 863 (FICHTEL & SACHS)  * Ansprüche; Seite 5, Zeilen 15 bis 18; Fig. * | 1 |
| A | DE - A1 - 2 807 391 (HONDA GIKEN KOGYO K.K.) | |
| A | DE - A1 - 2 554 349 (BOGE GMBH) | |

**KLASSIFIKATION DER ANMELDUNG (Int.Cl.3)**

F 16 F 9/36

**RECHERCHIERTE SACHGEBIETE (Int. Cl.3)**

B 60 G 13/00

B 60 G 15/00

F 16 F 9/00

F 16 J 15/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 18-12-1980 | LEITZ |

EPA form 1503.1   06.78

BAD ORIGINAL